# EUROPÄISCHE PATENTSCHRIFT

(11) **EP 3 216 073 B1**
(45) Veröffentlichungstag und Bekanntmachung des Hinweises auf die Patenterteilung: **10.04.2019**
(21) Anmeldenummer: 15784727.8
(22) Anmeldetag: 26.10.2015
(51) Int. Cl.: H01M 4/38, H01M 4/62, H01M 10/052, H01M 4/60, H01M 4/36

(54) **ELEKTRODE FÜR EINE BATTERIEZELLE UND BATTERIEZELLE**
ELECTRODE FOR A BATTERY CELL AND BATTERY CELL
ÉLECTRODE POUR CELLULE DE BATTERIE ET BATTERIE

(30) Priorität: 05.11.2014 DE 102014222531
(43) Veröffentlichungstag der Anmeldung: 13.09.2017
(73) Patentinhaber: Robert Bosch GmbH, 70442 Stuttgart (DE)
(72) Erfinder: SCHUMANN, Bernd, 71277 Rutesheim (DE); VERMA, Pallavi, 70771 Leinfelden (DE)
(86) Internationale Anmeldenummer: PCT/EP2015/074725
(87) Internationale Veröffentlichungsnummer: WO 2016/071137

(56) Entgegenhaltungen:
- EP-A1- 2 306 562
- US-A1- 2010 129 704
- US-A1- 2011 287 318
- US-A1- 2014 045 065

## Beschreibung

Die Erfindung betrifft eine Elektrode für eine Batteriezelle, welche ein Aktivmaterial umfasst, welches Silizium enthält, und welches ein erstes Polymer enthält, das ionisch leitfähig ist. Die Erfindung betrifft auch eine Batteriezelle, welche eine erfindungsgemäße Elektrode umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Graphit oder Silizium.

In das Aktivmaterial der Anode sind Lithiumatome eingelagert. Beim Betrieb der Batteriezelle, also bei einem Entladevorgang, fließen Elektronen in einem äußeren Stromkreis von der Anode zur Kathode. Innerhalb der Batteriezelle wandern Lithiumionen bei einem Entladevorgang von der Anode zur Kathode. Ein Anodenmaterial wie beispielsweise Graphit kann Lithiumionen in seinem Kristallgitter einlagern, wenn deren Ladung durch ein zusätzliches Elektron pro Lithiumion im Graphit kompensiert wird. Bei einem Entladevorgang werden die Lithiumionen dann wieder ausgelagert, was auch als Deinterkalation bezeichnet wird. Bei einem Ladevorgang der Batteriezelle wandern die Lithiumionen von der Kathode zu der Anode. Dabei lagern die Lithiumionen wieder in das Aktivmaterial der Anode, beispielsweise Graphit, reversibel ein, was auch als Interkalation bezeichnet wird.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die beiden Elektroden des Elektrodenwickels werden mittels Kollektoren elektrisch mit Polen der Batteriezelle, welche auch als Terminals bezeichnet werden, verbunden. Eine Batteriezelle umfasst in der Regel eine oder mehrere Elektrodeneinheiten. Die Elektroden und der Separator sind von einem in der Regel flüssigen Elektrolyten umgeben. Der Elektrolyt ist für die Lithiumionen leitfähig und ermöglicht den Transport der Lithiumionen zwischen den Elektroden.

Die Batteriezelle weist ferner ein Zellengehäuse auf, welches beispielsweise aus Aluminium gefertigt ist. Das Zellengehäuse ist in der Regel prismatisch, insbesondere quaderförmig, ausgestaltet und druckfest ausgebildet. Die Terminals befinden sich dabei außerhalb des Zellengehäuses. Nach dem Verbinden der Elektroden mit den Terminals wird der Elektrolyt in das Zellengehäuse gefüllt.

Eine gattungsgemäße Elektrode, insbesondere eine Anode, für eine Lithium-Ionen-Batterie, ist beispielsweise aus der US 2013/0288126 A1 bekannt. Das Aktivmaterial der Anode enthält Silizium sowie ein ionisch leitfähiges Polymer, beispielsweise Triethylenoxid.

Aus der US 2010/0129704 A1 ist ein Aktivmaterial für eine Anode bekannt, welches neben Silizium einen Binder aus drei Polymeren aufweist, welcher die ionische Leitfähigkeit des Aktivmaterials erhöht.

In der US 2014/0045065 A1 ist ein Aktivmaterial für eine Anode offenbart, welches eine Polymer-Matrix aus elektrisch leitfähigen Polymeren enthält, in welchem Silizium eingelagert ist.

Ein weiteres Aktivmaterial für eine Anode ist aus der WO 2013/116711 A1 bekannt. Das Aktivmaterial umfasst ein leitfähiges Polymer, welches mit Silizium beschichtet ist.

Silizium weist, als Aktivmaterial der Anode, eine im Vergleich zu Graphit erhöhte Speicherfähigkeit für Lithiumionen auf. Das Silizium als Aktivmaterial der Anode wird jedoch bei einigen Elektrolyten durch chemische Reaktionen des Siliziums mit dem flüssigen Elektrolyten angegriffen. Die Reaktionsprodukte werden dann gemeinsam mit dem enthaltenen Lithium, auf der Oberfläche des Aktivmaterials ablagert und bilden dort eine Schicht, welche als "solid electrolyte interphase" (SEI) bezeichnet wird. Da das Silizium nicht an der Rückreaktion teilnimmt, steht das dort abgelagerte Lithium zur Interkalation und für den Transport von Lithiumionen zwischen den Elektroden nicht mehr zur Verfügung. Dadurch nimmt die Kapazität der Anoden für Lithiumionen ständig ab, und die Kathode kann danach nicht mehr vollständig aufgeladen werden.

Diesbezüglich ist aus der US 2015/0272572 A1 ein Elektrodenaktivmaterial für Lithiumakkumulatoren bekannt, wobei das Elektrodenaktivmaterial ein Polymer, umfassend 3,4-Ethylendioxythiophen- und Oxialkyl-Wiederholungseinheiten umfasst.

### Offenbarung der Erfindung

Es wird eine Elektrode für eine Batteriezelle vorgeschlagen. Die Elektrode umfasst ein Aktivmaterial, welches Silizium enthält, und welches ein erstes Polymer enthält, das ionisch leitfähig ist.

Erfindungsgemäß enthält das Aktivmaterial ein Copolymer, insbesondere ein Block-Copolymer, welches das erste Polymer und ein zweites Polymer umfasst, wobei das zweite Polymer elektrisch leitfähig ist. Die elektrische Leitfähigkeit des zweiten Polymers beträgt dabei vorzugsweise mindestens 10⁻⁴ S/cm, besonders vorzugsweise mindestens 10⁻¹ S/cm.

Ein Block-Copolymer umfasst beispielsweise mehrere Blöcke aus dem ersten Polymer und mehrere Blöcke aus dem zweiten Polymer. Die Blöcke aus dem ersten Polymer sind dabei chemisch an die Blöcke aus dem zweiten Polymer gebunden.

Bei der erfindungsgemäßen Elektrode handelt es sich insbesondere um eine Anode einer Batteriezelle.

Gemäß einer vorteilhaften Ausgestaltung der Erfindung enthält das erste Polymer Polyethylenoxid (PEO), welches eine verhältnismäßig gut ionische Leitfähigkeit aufweist. Vorzugsweise beträgt der Anteil des Polyethylenoxid (PEO an dem ersten Polymer zwischen 80% und 100%.

Gemäß einer vorteilhaften Ausgestaltung der Erfindung enthält das zweite Polymer Polyanilin (PANI) oder Polypyrrol (PPY). Diese Polymere weisen eine verhältnismäßig gut elektrische Leitfähigkeit auf.

Gemäß einer weiteren vorteilhaften Ausgestaltung der Erfindung enthält das Aktivmaterial der Elektrode zusätzlich Kohlenstoff, insbesondere in Form von Kohlenstoffpartikeln. Die Kohlenstoffpartikel können beispielsweise in Form von Kugeln, Fasern oder unregelmäßigen Brocken vorliegen.

Das Aktivmaterial kann reines Silizium aufweisen. Es ist aber auch denkbar, dass das Aktivmaterial eine Silizium enthaltende Legierung aufweist. Auch eine Dotierung ist denkbar.

Insbesondere sind Legierungen mit einem aktiven Metall, welches Lithiumionen aufnehmen kann, denkbar. Beispielhaft seien hier Aluminium, Magnesium und Zinn genannt.

Aber auch eine Legierung mit einem inaktiven Metall, welches keine Lithiumionen aufnehmen kann, ist denkbar. Beispiele dafür sind unter anderem Eisen, Titan und Kupfer.

Es wird auch eine Batteriezelle vorgeschlagen, welche mindestens eine erfindungsgemäße Elektrode umfasst.

Eine erfindungsgemäße Batterie findet vorteilhaft Verwendung in einem Elektrofahrzeug (EV), in einem Hybridfahrzeug (HEV), oder in einem Plug-In-Hybridfahrzeug (PHEV).

### Vorteile der Erfindung

Die Elektrode weist, wegen des Siliziums enthaltenden Aktivmaterials, eine im Vergleich zu Graphit erhöhte Speicherfähigkeit für Lithiumionen auf. Auch weist das Aktivmaterial der Elektrode durch das Copolymer eine hohe ionische Leitfähigkeit für Lithiumionen sowie eine hohe elektrische Leitfähigkeit für Elektronen auf. Das ionisch leitfähige erste Polymer wirkt gleichzeitig als Kleber, beziehungsweise als Binder, und verstärkt die Stabilität des Aktivmaterials sowie die Haftung des Aktivmaterials auf einem folienartigen Stromableiter, da es weicher und an Oberflächen anschmiegsamer ist.

Ebenso haftet der elektronenleitende Teil an den Siliziumkörnern und überbrückt neben den teilweise bereits vorhandenen Kontakten an den Berührstellen der Siliziumkörner auch einen weiteren Bereich zwischen den Siliziumkörnern mit einer leitfähigen Brücke.

Das Silizium ist, zumindest weitgehend, in das Copolymer dicht eingebettet. Dadurch ist eine Berührung von Elektrolyt und Silizium und damit eine Ablagerung des Elektrolyten auf der Oberfläche des Aktivmaterials, zumindest weitgehend, verhindert. Beim Betrieb der Batteriezelle findet somit keine oder nur eine stark verringerte Bildung einer "solid electrolyte interphase" (SEI) Schicht statt.

Bei der Interkalation von Lithiumionen in das Silizium des Aktivmaterials der Anode dehnt sich das Silizium aus, wobei sich das Volumen des Siliziums auf bis zu 270% vergrößert. Das Copolymer ist verhältnismäßig flexibel und gestattet derartige Volumenänderungen.

### Kurze Beschreibung der Zeichnungen

Ausführungsformen der Erfindung werden anhand der Zeichnungen und der nachfolgenden Beschreibung näher erläutert.

Es zeigen:

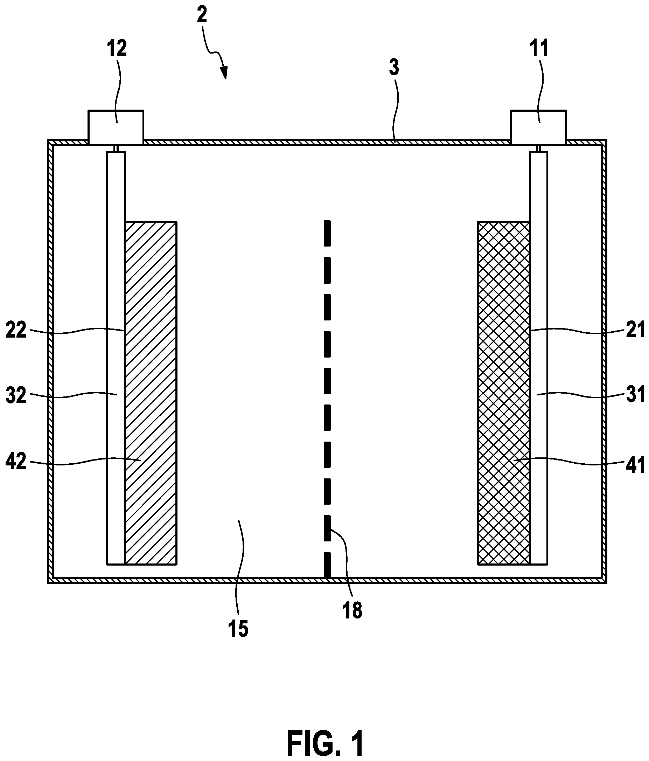

- Figur 1: eine schematische Darstellung einer Batteriezelle und

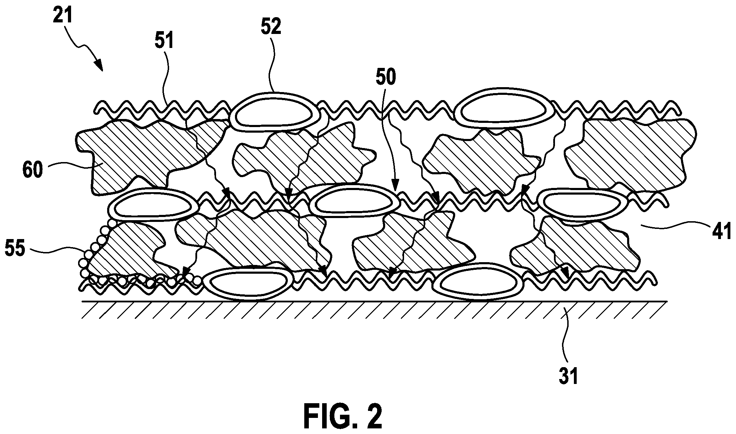

- Figur 2: einen Schnitt durch eine Anode in schematischer, nicht maßstäblicher Darstellung.

### Ausführungsformen der Erfindung

Eine Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden. Die Terminals 11, 12 sind beabstandet voneinander an einer Deckfläche des prismatischen Zellengehäuses 3 angeordnet.

Innerhalb des Zellengehäuses 3 der Batteriezelle 2 ist ein Elektrodenwickel angeordnet, welcher zwei Elektroden, nämlich eine Anode 21 und eine Kathode 22, aufweist. Die Anode 21 und die Kathode 22 sind jeweils folienartig ausgeführt und unter Zwischenlage eines Separators 18 zu dem Elektrodenwickel gewickelt. Es ist auch denkbar, dass mehrere Elektrodenwickel in dem Zellengehäuse 3 vorgesehen sind.

Die Anode 21 umfasst ein anodisches Aktivmaterial 41, welches folienartig ausgeführt ist. Das anodische Aktivmaterial 41 weist als Grundstoff Silizium 60 oder eine Silizium 60 enthaltende Legierung auf. Die Anode 21 umfasst ferner einen Stromableiter 31, welcher ebenfalls folienartig ausgebildet ist. Das anodische Aktivmaterial 41 und der Stromableiter 31 sind flächig aneinander gelegt und miteinander verbunden.

Der Stromableiter 31 der Anode 21 ist elektrisch leitfähig ausgeführt und aus einem Metall gefertigt, beispielsweise aus Kupfer. Der Stromableiter 31 der Anode 21 ist elektrisch mit dem negativen Terminal 11 der Batteriezelle 2 verbunden.

Die Kathode 22 umfasst ein kathodisches Aktivmaterial 42, welches folienartig ausgeführt ist. Das kathodische Aktivmaterial 42 weist als Grundstoff ein Metalloxid auf, beispielsweise Lithium-Kobalt-Oxid (LiCoO₂). Die Kathode 22 umfasst ferner einen Stromableiter 32, welcher ebenfalls folienartig ausgebildet ist.

Das kathodische Aktivmaterial 42 und der Stromableiter 32 sind flächig aneinander gelegt und miteinander verbunden.

Der Stromableiter 32 der Kathode 22 ist elektrisch leitfähig ausgeführt und aus einem Metall gefertigt, beispielsweise aus Aluminium. Der Stromableiter 32 der Kathode 22 ist elektrisch mit dem positiven Terminal 12 der Batteriezelle 2 verbunden.

Die Anode 21 und die Kathode 22 sind durch den Separator 18 voneinander getrennt. Der Separator 18 ist ebenfalls folienartig ausgebildet. Der Separator 18 ist elektrisch isolierend ausgebildet, aber ionisch leitfähig, also für Lithiumionen durchlässig.

Das Zellengehäuse 3 der Batteriezelle 2 ist mit einem flüssigen Elektrolyten 15 gefüllt. Der Elektrolyt 15 umgibt die Anode 21, die Kathode 22 und den Separator 18. Auch der Elektrolyt 15 ist ionisch leitfähig.

Das anodische Aktivmaterial 41 der Anode 21 der Batteriezelle 2 weist ein Copolymer 50 auf, welches ein erstes Polymer 51 und ein zweites Polymer 52 umfasst. Das erste Polymer 51 und das zweite Polymer 52 des Copolymers 50 bilden dabei eine sich gegenseitig durchdringende, ionisch leitfähige und elektrisch leitfähige Struktur.

In das Copolymer 50 ist Silizium 60, vorliegend in Reinform, eingebettet. Das Silizium liegt dabei in Form von Partikeln vor, welche eine Größe von mehreren Nanometern oder Mikrometern aufweisen.

Anstelle oder zusätzlich zu reinem Silizium 60 kann das anodische Aktivmaterial 41 auch eine Silizium 60 enthaltende Legierung aufweisen. Dabei kann es sich um eine Legierung mit einem aktiven Metall handeln, beispielsweise mit Aluminium, Magnesium oder Zinn, also mit einem Metall, welches Lithiumionen aufnehmen kann. Aber auch eine Legierung mit einem inaktiven Metall ist denkbar, beispielsweise mit Eisen, Titan oder Kupfer, also mit einem Metall, welches keine Lithiumionen aufnehmen kann.

Das erste Polymer 51 des Copolymers 50 ist ionisch leitfähig, also für Lithiumionen durchlässig. Lithiumionen können somit durch das erste Polymer 51, und damit durch das anodische Aktivmaterial 41 der Anode 21, hindurchwandern. Als Material für erste Polymer 51 kommt beispielsweise Polyethylenoxid (PEO) in Frage.

Das erste Polymer 51 wirkt gleichzeitig als Kleber, beziehungsweise als Binder, für das anodische Aktivmaterial 41. Das erste Polymer 51 erhöht somit die mechanische Stabilität des anodische Aktivmaterials 41 und verbesserte die Haftung des anodische Aktivmaterials 41 auf dem Stromableiter 31 der Anode 21.

Das zweite Polymer 52 des Copolymers 50 ist elektrisch leitfähig, also für Elektronen durchlässig. Elektronen können somit durch das zweite Polymer 52, und damit durch das anodische Aktivmaterial 41, hindurchwandern. Als Material für zweite Polymer 52 kommen beispielsweise Polyanilin (PANI) oder Polypyrrol (PPY) in Frage.

Das Copolymer 50 ist jedoch für den Elektrolyten 15 undurchlässig. Der Elektrolyt 15 kann somit das Copolymer 50 nicht durchdringen und damit nicht in Kontakt mit dem Silizium 60 gelangen. Somit kann sich kein Elektrolyt 15 auf dem Silizium 60, beziehungsweise auf der Silizium 60 enthaltenden Legierung, des anodischen Aktivmaterials 41 ablagern. Das Copolymer 50 wirkt also für den Elektrolyten 15 wie eine Barriere.

Bei Anlagerung von Lithium dehnt sich das Silizium 60 aus. Bei einer solchen Ausdehnung des Siliziums 60 des anodischen Aktivmaterials 41 dehnt sich auch das Copolymer 50 entsprechend, elastisch, aus und bildet weiterhin eine für den Elektrolyten 15 undurchlässige Barriere.

Das anodische Aktivmaterial 41 enthält ferner Kohlenstoff 55, welcher in Form von Kohlenstoffpartikeln in das anodische Aktivmaterial 41 eingebracht ist. Der Kohlenstoff 55 gestattet einen guten Kontakt zwischen dem zweiten Polymer 52 und dem Silizium 60.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Elektrode (21, 22) für eine Batteriezelle (2), umfassend ein Aktivmaterial (41, 42), welches Silizium (60) enthält, und welches ein erstes Polymer (51) enthält, das ionisch leitfähig ist,
**dadurch gekennzeichnet, dass**
das Aktivmaterial (41, 42) ein Copolymer (50) enthält, welches das erste Polymer (51) und ein zweites Polymer (52) umfasst, wobei das zweite Polymer (52) elektrisch leitfähig ist, und wobei das zweite Polymer (52) Polyanilin (PANI) oder Polypyrrol (PPY) enthält.

2. Elektrode (21) nach Anspruch 1, **dadurch gekennzeichnet, dass** die Elektrode (21) eine Anode (21) einer Batteriezelle (2) ist.

3. Elektrode (21, 22) nach einem der vorstehenden Ansprüche, **dadurch gekennzeichnet, dass** das erste Polymer (51) Polyethylenoxid (PEO) enthält.

4. Elektrode (21, 22) nach einem der vorstehenden Ansprüche, **dadurch gekennzeichnet, dass** das Aktivmaterial (41, 42) Kohlenstoff (55) enthält.

5. Elektrode (21, 22) nach einem der vorstehenden Ansprüche, **dadurch gekennzeichnet, dass** das Aktivmaterial (41, 42) eine Silizium (60) enthaltende Legierung aufweist.

6. Elektrode (21, 22) nach Anspruch 5, **dadurch gekennzeichnet, dass** die Legierung ein aktives Metall enthält, welches Lithiumionen aufnehmen kann.

7. Elektrode (21, 22) nach Anspruch 5, **dadurch gekennzeichnet, dass** die Legierung ein inaktives Metall enthält, welches keine Lithiumionen aufnehmen kann.

8. Batteriezelle (2), umfassend mindestens eine Elektrode (21, 22) nach einem der vorstehenden Ansprüche.

9. Verwendung der Batteriezelle (2) nach Anspruch 8 in einem Elektrofahrzeug (EV), in einem Hybridfahrzeug (HEV), oder in einem Plug-In-Hybridfahrzeug (PHEV).

## Claims

1. Electrode (21, 22) for a battery cell (2), comprising an active material (41, 42) comprising silicon (60) and comprising a first, ionically conductive polymer (51),
**characterized in that**
the active material (41, 42) comprises a copolymer (50) comprising the first polymer (51) and a second polymer (52), where the second polymer (52) is electrically conductive, and where the second polymer (52) comprises polyaniline (PANI) or polypyrrole (PPY).

2. Electrode (21) according to Claim 1, **characterized in that** the electrode (21) is an anode (21) of a battery cell (2).

3. Electrode (21, 22) according to either of the preceding claims, **characterized in that** the first polymer (51) comprises polyethylene oxide (PEO).

4. Electrode (21, 22) according to any of the preceding claims, **characterized in that** the active material (41, 42) comprises carbon (55).

5. Electrode (21, 22) according to any of the preceding claims, **characterized in that** the active material (41, 42) includes an alloy containing silicon (60).

6. Electrode (21, 22) according to Claim 5, **characterized in that** the alloy comprises an active metal able to absorb lithium ions.

7. Electrode (21, 22) according to Claim 5, **characterized in that** the alloy comprises an inactive metal unable to absorb lithium ions.

8. Battery cell (2) comprising at least one electrode (21, 22) according to any of the preceding claims.

9. Use of the battery cell (2) according to Claim 8 in an electric vehicle (EV), in a hybrid vehicle (HEV), or in a plug-in hybrid vehicle (PHEV).

## Revendications

1. Électrode (21, 22) destinée à une cellule de batterie (2), comprenant un matériau actif (41, 42) qui contient du silicium (60) et qui contient un premier polymère (51) qui est conducteur d'ions,
**caractérisé en ce que** le matériau actif (41, 42) contient un copolymère (50) qui comprend le premier polymère (51) et un deuxième polymère (52), dans lequel le deuxième polymère (52) est électriquement conducteur et le deuxième polymère (52) contient une polyaniline (PANI) ou un polypyrrole (PPY).

2. Électrode (21) selon la revendication 1, **caractérisée en ce que** l'électrode (21) est une anode (21) d'une cellule (2) de batterie.

3. Électrode (21, 22) selon l'une des revendications précédentes, **caractérisée en ce que** le premier polymère (51) contient de l'oxyde de polyéthylène (PEO).

4. Électrode (21, 22) selon l'une des revendications précédentes, **caractérisée en ce que** le matériau actif (41, 42) contient du carbone (55).

5. Électrode (21, 22) selon l'une des revendications précédentes, **caractérisée en ce que** le matériau actif (41, 42) comporte un alliage contenant du silicium (60).

6. Électrode (21, 22) selon la revendication 5, **caractérisée en ce que** l'alliage contient un métal actif capable d'absorber des ions lithium.

7. Électrode (21, 22) selon la revendication 5, **caractérisée en ce que** l'alliage contient un métal inactif qui ne peut pas absorber d'ions lithium.

8. Cellule de batterie (2), comprenant au moins une électrode (21, 22) selon l'une des revendications précédentes.

9. Utilisation de la cellule de batterie (2) selon la revendication 8 dans un véhicule électrique (EV), dans un véhicule hybride (HEV) ou dans un véhicule hybride rechargeable (PHEV).
